# EUROPEAN PATENT APPLICATION

(11) **EP 4 822 519 A1**
(43) Date of publication of application: **14.10.2026**
(21) Application number: 26167095.4
(22) Date of filing: 24.03.2026
(51) Int. Cl.: G06F 7/544, G06F 7/483

(54) **HARDWARE ACCELERATOR FOR PERFORMING TRANSCENDENTAL MATH FUNCTIONS USING FLOATING-POINT NUMBERS**

(30) Priority: 10.04.2025 US 202519175356
(71) Applicant: NXP B.V., 5656 AG Eindhoven (NL)
(72) Inventor: Yang, Hung-Wen, 5656AG Eindhoven (NL); Traylor, Kevin Bruce, 5656AG Eindhoven (NL)
(74) Representative: Schwarzweller, Thomas

(57) **Abstract**

A transcendental math accelerator including a barrel shifter, a polynomial coefficient table (PCT), a polynomial interpolator, a normalization shifter, a result exponent table (RET), and exponent and sign logic (ESL). The barrel shifter shifts the input mantissa based on a specified function and the input exponent into a polynomial coefficient table index (PCTI) and an interpolation index. The PCT selects a coefficient set using the specified function and the PCTI. The polynomial interpolator calculates a preliminary output mantissa according to a polynomial equation using the coefficient set and the interpolator index. The normalization shifter shifts the output mantissa for a normalized floating-point format. The RET selects an exponent based on the function, the input exponent, and the PCTI. The ESL determines the output sign using the input sign and the function, and determines the output exponent based on the input exponent, the result exponent, and any shifts by the normalization shifter.

## Description

### BACKGROUND

### FIELD

The present disclosure relates in general to hardware accelerators, and more particularly to a transcendental math hardware accelerator for performing transcendental math functions for floating-point numbers.

### DESCRIPTION OF THE RELATED ART

In mathematics, a transcendental function, as compared to an algebraic function, is an analytic function that does not satisfy a polynomial equation whose coefficients are functions of the independent variable that can be written using only the basic operations of addition, subtraction, multiplication, and division. Stated another way, a transcendental function in mathematics is a function that cannot be expressed as finite combination of algebraic expressions and operations of addition, subtraction, multiplication, division, power, and root. A non-exhaustive set of examples of transcendental functions for an input value "x" include logarithmic and sinusoidal functions, such as log x, sin x, cos x, and e^{x}.

Conventional transcendental math architectures for solving transcendental math functions typically require a substantial number of clock cycles to generate a value. Some conventional architectures require integer to floating-point or floating-point to integer conversions. Conventional transcendental math architectures also have a significant limitation in that they can only be used to solve only one or a small number of specific math functions. For these and other reasons, many of the more complex transcendental math algorithms, due to the complexity, are implemented in software which often consumes a substantial number of clock cycles (e.g., 30-50 clock cycles or more) to produce a result. In addition, the same number of clock cycles are needed for each subsequent result in software, resulting in substantial inefficiency for such software configurations.

### BRIEF DESCRIPTION OF THE DRAWINGS

Embodiments of the present invention are illustrated by way of example and are not limited by the accompanying figures. Similar references in the figures may indicate similar elements. Elements in the figures are illustrated for simplicity and clarity and have not necessarily been drawn to scale.
FIG. 1 is a simplified block diagram of a transcendental math hardware accelerator implemented according to one embodiment for performing transcendental math functions using floating-point numbers.
FIG. 2 is a graphic diagram plotting a portion of the tanh(x) function versus input value x, in which the tanh(x) curve is further subdivided into multiple segments that are modeled with different granularities and a corresponding number of sets of polynomial coefficient entries based on the unbiased exponent value EXP according to one embodiment.
FIG. 3 is a figurative block diagram illustrating operation of the barrel shifter of FIG. 1 as controlled by the shift value table implemented according to one embodiment for shifting the mantissa of an input floating-point number based on a corresponding one of the 4 segments of the tanh(x) function illustrated in FIG. 2.
FIG. 4 is a figurative diagram illustrating a portion of the polynomial coefficient table of FIG. 1 associated with the tanh(x) function.
FIG. 5 is a graphic diagram plotting curves associated with a pair of basic functions including the reciprocal function y = 1/x = recip(x) and the square-root function $y = \sqrt{x} = sqrt \left(x\right)$.
FIG. 6 is a figurative diagram illustrating a portion of the polynomial coefficient table of FIG. 1 storing coefficient sets for both the reciprocal function recip(x) and the square-root function sqrt(x) according to one embodiment.
FIG. 7 is a graphic diagram plotting a portion of the log2(x) function versus input value x centered at an input value of x = 1.
FIG. 8 is a figurative block diagram illustrating operation of the leading zero/one count block of FIG. 1 when implemented according to one embodiment for the log2(x) function.
FIG. 9 is a chart in tabular format that lists the F value, a number of entries (# entries) identifying the number of coefficient sets stored in the polynomial coefficient table of FIG. 1, the unbiased exponent value EXP, the input mantissa, a shift value, and the adjusted mantissa after any shifting by the barrel shifter for the reciprocal, square-root, reciprocal square-root, and hyperbolic tangent functions using the 32-bit single-precision floating-point format.
FIG. 10 is a simplified block diagram of a transcendental math hardware accelerator implemented according to an alternative embodiment including an overflow/underflow table.

### DETAILED DESCRIPTION

A transcendental math hardware accelerator as described herein is configured to perform a selected one of multiple supported math functions including multiple transcendental functions on an input floating-point number to generate an output floating-point number. Each floating-point number includes a sign, an exponent, and mantissa. In one embodiment, the transcendental math hardware accelerator using the 32-bit single-precision floating-point format. The accelerator includes a barrel shifter, a polynomial coefficient table, a polynomial interpolator, a normalization shifter, a result exponent table, and exponent and sign logic. The barrel shifter is configured to shift the input mantissa by an amount specified by a shift value table based on a specified function and the input exponent into a polynomial coefficient table index and an interpolation index. The polynomial coefficient table is configured to select a coefficient set using a table index determined using the specified function and the polynomial coefficient table index. The polynomial interpolator is configured to calculate a preliminary output mantissa according to a predetermined polynomial equation using the selected coefficient set and the interpolator index. The normalization shifter is configured to shift the preliminary output mantissa to provide the output mantissa with a normalized floating-point format. The result exponent table is configured to select a result exponent using the selected function, the input exponent, and the polynomial coefficient table index. The exponent and sign logic is configured to determine the output sign using the input sign and the specified function and to determine the output exponent based on the input exponent, the result exponent and a number of shifts determined by the normalization shifter.

The transcendental math hardware accelerator may include a special number handling processor configured to detect when the input number has a special number format, such as +/zero, +/- infinity, and (NAN). The special number handling processor either corrects the input floating-point number, directly determines and provides an output floating-point number, or indicates an error.

The transcendental math hardware accelerator may further include a leading zero/one count processor configured to detect when the input floating-point number is within a critical range for the selected function such that the output floating-point number is within a zero-crossing region. The leading zero/one count processor is further configured to adjust the result exponent based on a leading 0 or a leading 1 count value. The leading zero/one count processor may include a controller, a counter, an adder, and an exponent adjuster. The controller is configured to detect that the input floating-point number is within the critical range for the selected function, and when detected, to activate the counter configured to count leading 0's or 1's of the interpolation index to provide the count value. The adder is configured to subtract the count value from the result exponent to provide an adjusted exponent, and the exponent adjuster is configured to adjust the output exponent provided by the exponent and sign logic based on the adjusted exponent.

The predetermined polynomial equation may be a second-order polynomial equation in which each coefficient set includes up to three coefficients. Generally, the polynomial equation is an Nth order polynomial equation in which each coefficient set includes up to N+1 coefficients.

For one or more of the supported math functions, the specified function maps to a base address and the polynomial coefficient table index operates as an offset relative to the base address to generate the table index used to select a coefficient set stored in the polynomial coefficient table.

For one or more of the supported math functions, the specified function maps to a first base address when the input exponent is odd and maps to a second base offset when the input exponent is even, in which the polynomial coefficient table index operates as an offset relative to either the first base address or the second base address to generate the table index used to select a coefficient set stored in the polynomial coefficient table.

For one or more of the supported math functions in which the number of coefficient sets varies with the input exponent, the specified function maps to a base address, the input exponent operates as a first offset relative to the base address, and the polynomial coefficient table index operates as a second offset relative to the first offset to generate the table index used to select a coefficient set stored in the polynomial coefficient table.

In one embodiment, the normalization shifter is further configured to detect an overflow or underflow of the preliminary output mantissa and to shift the preliminary output mantissa and the output exponent accordingly. In another embodiment, the transcendental math hardware accelerator includes an overflow/underflow table that uses the input exponent, the function value, the polynomial coefficient table index, and the interpolation index to determine an index used to select a shift value provided to the normalization shifter for shifting the mantissa and to the exponent and sign logic for adding/subtracting the output exponent by a corresponding amount.

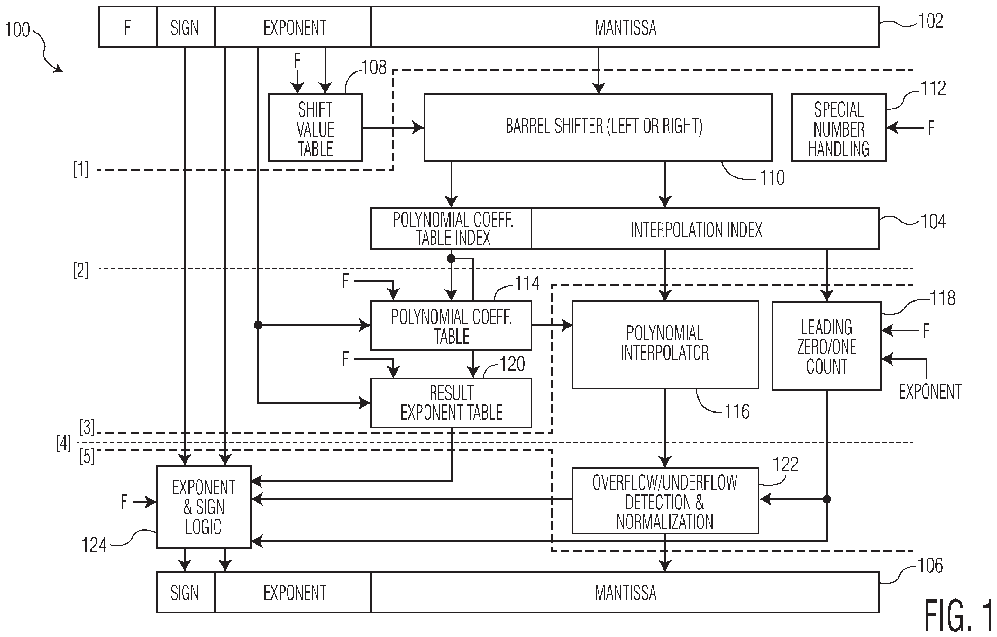

FIG. 1 is a simplified block diagram of a transcendental math hardware accelerator 100 implemented according to one embodiment for performing transcendental math functions using floating-point numbers. The transcendental math hardware accelerator 100 includes an input register 102, an interpolation register 104, an output register 106, a shift value table 108, a barrel shifter 110, a special number handling processor 112, a polynomial coefficient table 114, a polynomial interpolator 116, a leading zero/one count processor 118, a result exponent table 120, an overflow/underflow detection and normalization (OUDAN) shifter 122, and an exponent and sign logic block 124. Any of the registers (input, interpolation, output) may be configured using any suitable type of memory device, in which registers are typically used for speed. Also, each register may be configured using one or more different registers. The transcendental math hardware accelerator 100 is configured to operate using normal floating-point numbers, although alternative formats are contemplated, such as, for example, subnormal number formats. In one embodiment, the floating-point numbers are expressed using a 32-bit single-precision floating-point format, although alternative formats and sizes are contemplated using a different number of bits, such as, for example, a 64-bit double-precision floating-point format along with other formats known or to be determined.

In the illustrated embodiment using 32-bit normal floating-point numbers, the input and output registers 102 and 106 each include a sign bit, an 8-bit biased exponent (exp), and a 23-bit mantissa. The value of a normal floating-point number may be represented according to the following equation (1): $value = {\left(-1\right)}^{sign} \left[1+\frac{mantissa}{{2}^{M}}\right] {2}^{exponent - bias}$ (1) in which "sign" is represented by the sign bit (either "0" for positive numbers or "1" for negative numbers), the "1" within the square brackets is an implied value that is assumed and not explicitly represented, "M" is the number of mantissa bits (e.g., 23 bits for the 32-bit format), "mantissa" is represented by the M mantissa bits, "exponent" is the unsigned biased exponent value represented by the exponent bits, and a "bias" value. The bias value, which is assumed but not explicitly expressed, is subtracted from the unsigned biased exponent value to convert to an unbiased exponent value EXP having a signed range. For 32-bit normal floating-point numbers, the bias value is +127 so that the signed exponent ranges from -126 to +127. It is noted that the exponent value stored in the "Exponent" field of the input and output registers 102 and 106 is the unsigned biased exponent value, which may be readily converted to EXP used by many of the functional blocks of the transcendental math hardware accelerator 100. The value mantissa/2^{M} ranges from 0 to 0.9̅ (in which "9̅" denotes an infinitely repeating number, in which 9̅ = 999...) so that a value "A" within the square brackets, or A = [1 + mantissa/2^{M}], ranges from 1 to 1.9 according to the normal format.

The input register 102 is shown including a function field that holds a function value F identifying the function to be performed using the floating-point number stored in the input register 102. The F value includes a number of bits that collectively map to corresponding ones of the specified functions to be performed by the transcendental math hardware accelerator 100. The F value is provided to various blocks of the transcendental math hardware accelerator 100, such as the shift value table 108, the special number handling processor 112, the polynomial coefficient table 114, the polynomial interpolator 116, the leading zero/one count processor 118, the result exponent table 120, the OUDAN shifter 122, and the exponent and sign logic block 124. In one embodiment, the transcendental math hardware accelerator 100 is configured to perform several basic functions, which may include a reciprocal function y = 1/x = recip(x), a square-root function $y = \sqrt{x} = sqrt \left(x\right)$, and a reciprocal square-root function $y = 1 / \sqrt{x} = rsqrt \left(x\right)$, in which "x" represents the input floating-point number. Although these basic functions are algebraic functions rather than transcendental functions, the transcendental math hardware accelerator 100 is nonetheless configured to perform these basic functions.

In addition, the transcendental math hardware accelerator 100 is configured to perform several advanced transcendental functions, which may include a sine function y = sin(πx) = sinpi(x), a cosine function y = cos(πx) = cospi(x), an arctangent function y = tan⁻¹(x)/π = atan(x)/π, an arcsine function y = sin⁻¹(x)/π = asin (x)/π, a hyperbolic tangent function y = tanh(x), a base-2 logarithmic function y = log₂(x) = log2(x), and a base-2 power function y = 2^{x} = pow2(x). The transcendental math hardware accelerator 100 may be configured to perform additional basic functions or advanced functions depending upon the configuration. Again, the F value is configured to identify the math function to be performed on the input value to provide the output value.

The transcendental math hardware accelerator 100 is configured as a generalized architecture for performing transcendental math operations, as defined by the function value F, using the floating-point input value stored in the input register 102 to compute a floating-point output value loaded into the output register 106. As described further herein, the transcendental math hardware accelerator 100 is pipelined, such that a new operation can start every clock cycle for providing a corresponding result after a few clock cycles. A new function value F and a new input number may be provided each clock cycle and an output may be provided each clock cycle. In successive cycles, for example, a new function may be performed on a new input floating number each cycle, or the same function may be performed on a successive series of numbers (same or different numbers) in successive clock cycles, or even different functions may be successively performed on the same number in successive clock cycles. During operation, the transcendental math hardware accelerator 100 is configured to separately process the sign, the exponent, and the mantissa of the input floating-point number, and then reassemble sign, exponent, and mantissa into the output register 106 at the end.

Many of the supported math functions have one or more separate look-up tables stored within the polynomial coefficient table 114 for retrieving a set of polynomial interpolation coefficients that are provided to the polynomial interpolator 116 for generating a preliminary output mantissa. For certain high curvature transcendental math functions, the polynomial coefficient table 114 stores a different set of polynomials for different functional regions. The exponent, which defines the range of the number, is examined to dynamically divide the mantissa into two portions within the interpolation register 104 including a most significant portion used as a polynomial coefficient table index and a least significant portion used as an interpolation index. The most significant portion forming the polynomial coefficient table index is provided to the polynomial coefficient table 114, and the least significant portion forming interpolation index is provided to the polynomial interpolator 116. Using the polynomial coefficient table index, the polynomial coefficient table 114 retrieves a corresponding set of polynomial coefficients which are provided to an input of the polynomial interpolator 116. The polynomial interpolator 116 uses the set of polynomial coefficients and the interpolation index to calculate a preliminary output mantissa "y" provided to the OUDAN shifter 122. In one embodiment, for example, the polynomial interpolator 116 uses a set of three coefficients c0, c1, and c2 retrieved from the polynomial coefficient table 114 and the interpolation index in a second-order polynomial equation y = c₀ + c₁ * x + c₂ * x² to calculate the preliminary output mantissa y. In different embodiments, a different order polynomial equation using a different number of coefficients in each coefficient set may be used to achieve different levels of accuracy. In general, for an Nth order polynomial equation, at least N coefficients are including in each polynomial coefficient set, although there are usually N+1 coefficients in each coefficient set.

The shift value table 108 uses the function value F and the exponent from the input register 102 to control shifting of the mantissa loaded in the barrel shifter 110. The barrel shifter 110 is used to align the polynomial coefficient table index of the input mantissa provided to the polynomial coefficient table 114 while also trimming excessive least significant bits for the polynomial interpolator 116. The barrel shifter 110 provides the ability to change the position of fields within the mantissa in which the widths of the fields are determined by the exponent and the function type. The use of the barrel shifter 110 to dynamically align the mantissa bits simplifies multiplexer complexity of table lookup and interpolation. For example, a different number of polynomial sets may be needed and thus stored in the polynomial coefficient table 114 for the different functional regions of a given function, in which the polynomial coefficient table index uses a different number of significant bits. Thus, as described further below, the shift value table 108 uses the F value and the exponent to determine a number of bits to shift (e.g., right-shift) the mantissa loaded into the barrel shifter 110 rather than using a complex set of multiplexers to align the polynomial coefficient table index at the input of the polynomial coefficient table 114.

After interpolation, the preliminary output mantissa provided by the polynomial interpolator 116 may overflow or underflow relative to the normal floating-point mantissa range (between 1 and 1.9), in which the OUDAN shifter 122 is used to scale the mantissa. When the mantissa is scaled, the exponent is adjusted accordingly to achieve the normalized floating-point format.

For some functions, the exponent and sign logic block 124 may derive the output exponent directly from the input exponent using relatively simple equations or the like. The output exponent, however, may not be easily derived from simple equations for some of the more complex functions. For those more complex functions, result exponent values are stored in the result exponent table 120 and retrieved using the same table index as used for the polynomial coefficient table 114. In addition, the exponent and sign logic block 124 replaces the input exponent with the result exponent output of the result exponent table 120. The exponent and sign logic block 124 also separately converts the input sign bit to the output sign bit based on the values of the input sign bit and the function value F.

Special floating-point numbers, such as, for example, +/- zero, +/- infinity, not a number (NAN) including quiet NAN (qNAN) and signaling NAN (sNAN), etc., have a special number format and are detected and handled separately by the special number handling processor 112. The unsigned digital exponent value (stored in the "Exponent" field of the input and output registers 102 and 106) may range from all 0's to all 1's. For the 32-bit format, the stored unsigned exponent value is an 8-bit unsigned and biased exponent that ranges from 1 to 254 in which all 0's and all 1's are used for special numbers. The bias value of + 127 is subtracted from the biased exponent to determine the unbiased exponent, which range from -126 to +127. An unsigned biased exponent value of 127 represents an actual exponent of 0. The unbiased exponent is denoted herein as EXP.

The special numbers +/- zero is denoted with a biased exponent and mantissa of all 0's. If the exponent is all 0's while the mantissa is not all zeros, then the value is a denormalized number which means that this special number does not have an assumed leading one value. The special numbers +/- infinity are denoted with an exponent of all 1's and a mantissa of all 0's. The sign bit distinguishes between negative infinity and positive infinity. Operations with infinite values are well defined. Special NAN numbers, including qNAN and sNAN are used to represent error values that are not further described. A NAN is represented when exponent field is all 1's with a zero sign bit or a mantissa that is a 1 followed by 0's. This is a special value that might be used to denote a variable that does not yet hold a value. Depending upon the function and the type of special number, the special number handling processor 112 either corrects the number, indicates an error, or determines and directly provides a corresponding output number in the output register 106 after a corresponding number of clock cycles effectively bypassing the remaining functional blocks of the transcendental math hardware accelerator 100.

For some math functions with a "zero-crossing region" in which the input number is within a critical range (which may or may not be zero) of the math function such that output number is within a zero-crossing region that is close to 0, the resulting exponent changes rapidly while the input changes slightly. When at or near the zero-crossing region for these functions, the exponent estimate dominates the level of accuracy over mantissa estimate. The leading zero/one count processor 118 detects that the output is near the zero-crossing region and counts the number of leading 0 or 1 bits of the interpolation index as an indication of the magnitude of the input and uses the count to scale the exponent of the result as further described herein. The mantissa is also scaled accordingly.

The transcendental math hardware accelerator 100 may be pipelined for processing the floating-point numbers in stages in successive clock cycles. In the illustrated configuration, the transcendental math hardware accelerator 100 is separated into six pipeline stages separated by five dashed lines marked using bracketed numeric values [1], [2], [3], [4], and [5]. The dashed lines may represent pipeline registers (not shown) receiving a clock signal for advancing results from one stage to the next. It is noted that the so-called interpolation register 104 may not be a separate register but instead may be implemented by the pipeline register stage [2]. The F value and the input floating-point number are loaded into the input register 102. The F value and the unsigned exponent value are provided to the shift value table 108.

In the next clock cycle, the mantissa is loaded into the barrel shifter 110 and shifted left or right as indicated by F and the exponent, and the result is loaded into the interpolation register 104. The special number handling bock 112 detects and processes any special numbers as previously described. In the next clock cycle, the polynomial coefficient table index portion of the mantissa is provided to the polynomial coefficient table 114, which provides a corresponding set of coefficients to the polynomial interpolator 116. In addition, the result exponent table 120 receives the input unsigned exponent, the function value, and the polynomial coefficient table index portion of the mantissa and, depending upon the function value, determines a corresponding output exponent. In the next clock cycle, the polynomial interpolator 116 receives the interpolation index and calculates a preliminary output mantissa using the received coefficient set and the interpolation index. The leading zero/one count processor 118 determines whether to shift the mantissa and the exponent and by how much. In the next clock cycle, the preliminary output mantissa is received by the OUDAN shifter 122 and shifted right or left based on leading zero or one or based on whether an overflow or underflow is detected.

In the next and final output clock cycle, the output floating-point number is loaded into the output register 106. If a special number was detected by the special number handling processor 112, an error may be indicated or an output result may be loaded into the output register 106. If a special number is not indicated, the output mantissa from the OUDAN shifter 122 is loaded into the mantissa portion of the output register 106. The exponent and sign logic block 124 converts the input sign bit to an output sign bit that is loaded into the sign bit of the output register 106. Also, the exponent and sign logic block 124 either converts the input exponent or uses the exponent from the result exponent table 120 to generate the output exponent, which may be further shifted by the leading zero/one count processor 118, and the final output exponent is loaded into the exponent portion of the output register 106. With each new clock cycle, a new function value and a new floating-point number may be loaded into the input register 102 and processed through the pipelined stages in successive clock cycles in similar manner, so that after processing the first number, a new output floating-point number may be issued by the transcendental math hardware accelerator 100 with each clock cycle.

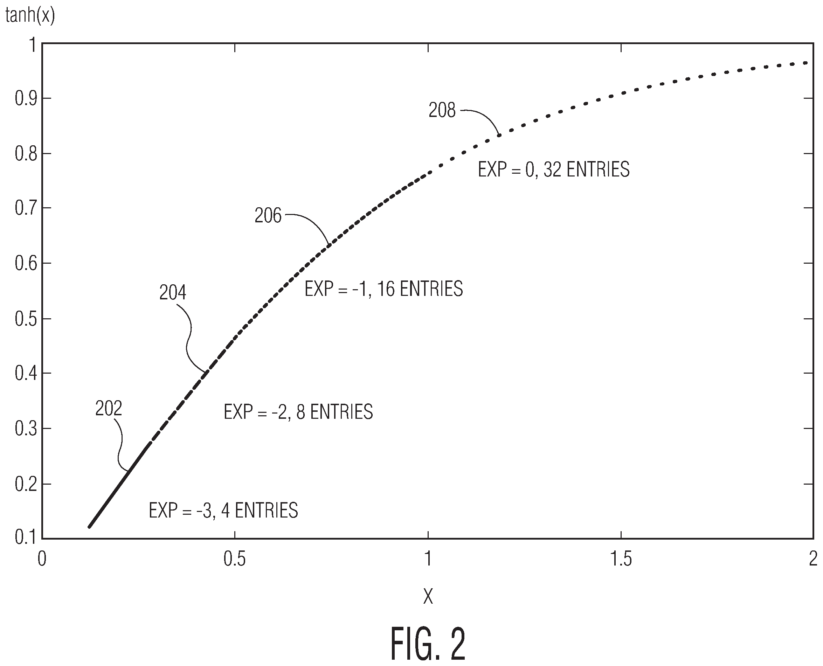

FIG. 2 is a graphic diagram plotting a portion of the tanh(x) function versus input value x, in which the tanh(x) curve is further subdivided into multiple segments that are modeled with different granularities and a corresponding number of sets of polynomial coefficient entries based on the unbiased exponent value EXP according to one embodiment. When the normal floating-point input number is relatively small such as between x = 0.125 to about 0.26 with an EXP = -3 as shown by a solid line 202, the tanh(x) value changes in a relatively linear fashion so that only 4 polynomial coefficient set entries are needed for modeling the tanh(x) function with sufficient accuracy. When the normal floating-point input number is a little larger such as between x = 0.26 to about 0.5 with an EXP = -2 as shown by a first dashed line 204, the tanh(x) value exhibits some curvature in which 8 polynomial coefficient set entries are needed for modeling the tanh(x) function with sufficient accuracy. When the normal floating-point input number is even larger such as between x = 0.5 to 1 with an EXP = -2 as shown by a second dashed line 206, the tanh(x) value exhibits an increased amount of curvature in which 16 polynomial coefficient set entries are needed for modeling the tanh(x) function with sufficient accuracy. When the normal floating-point input number is even larger such as between x = 1 to 2 with an EXP = 0 as shown by a dotted line 208, the tanh(x) value exhibits an even greater amount of curvature in which 32 polynomial coefficient set entries are needed for modeling the tanh(x) function with sufficient accuracy. It is appreciated that only a portion of the tanh(x) function is shown in which additional floating-point numbers with exponents less than -3 or exponents greater than 0 are not shown in FIG. 2.

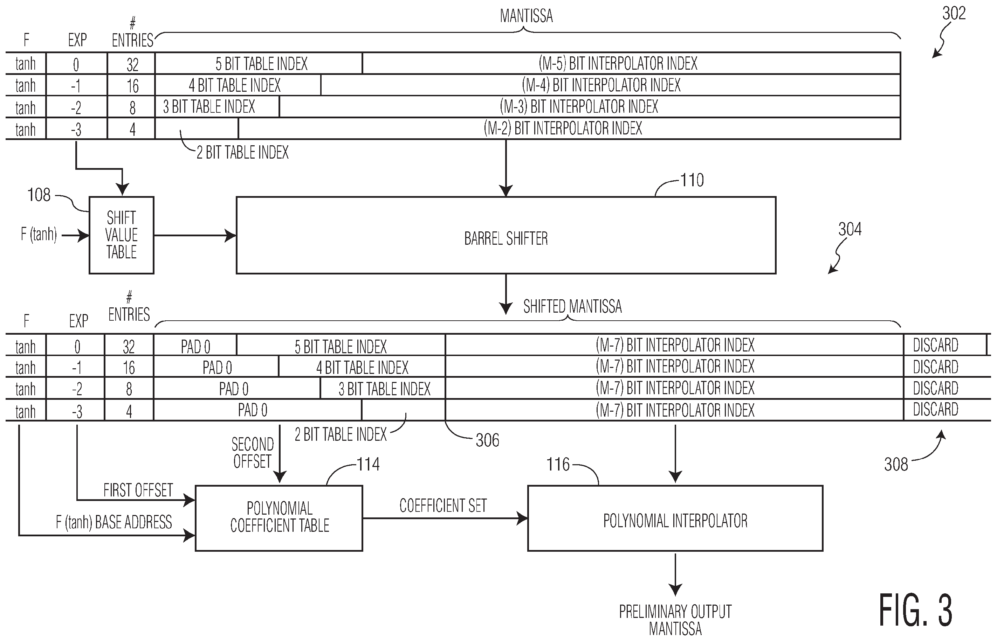

FIG. 3 is a figurative block diagram illustrating operation of the barrel shifter 110 as controlled by the shift value table 108 implemented according to one embodiment for shifting the mantissa of an input floating-point number based on a corresponding one of the 4 segments of the tanh(x) function illustrated in FIG. 2. A first table 302 lists 4 different mantissa values for the tanh(x) function as indicated by an F value of "tanh," the corresponding unbiased exponent EXP and a corresponding number of entries (# entries) indicating a number of sets of polynomial coefficient entries based on the exponent for modeling the tanh(x) function of the input number with sufficient accuracy. The first entry has EXP = 0 so that 32 entries are needed for modeling the input number with sufficient accuracy as shown by the line 208 of FIG. 2. A table index of 5 bits is used as an index for the 32 entries so that the 5 most significant bits (MSB's) of the corresponding mantissa are designated as the table index leaving the remaining lesser significant M - 5 bits as the interpolation index (e.g., 18 bits for a mantissa of 23 bits). The second entry with EXP = -1 has 16 entries so that the 4 MSB's of the second mantissa are designated as the table index leaving the remaining lesser significant M - 4 bits as the interpolation index (e.g., 19 bits). The third entry with EXP = -2 has 8 entries so that the 3 MSB's of the second mantissa are designated as the table index leaving the remaining lesser significant M - 3 bits as the interpolation index (e.g., 20 bits). The fourth entry with EXP = -3 has 4 entries so that the 2 MSB's of the second mantissa are designated as the table index leaving the remaining lesser significant M - 2 bits as the interpolation index (e.g., 21 bits).

It is appreciated that for the tanh(x) function, the exponent value of the input floating-point number is used to determine the size of the polynomial coefficient table index used by the polynomial coefficient table 114 to access the corresponding set of polynomial coefficients used by the polynomial interpolator 116. Since there are different sizes of the table index based on the segment of the tanh(x) function as indicated by input exponent, multiplexer logic or the like could be used to align the table index for use by the polynomial coefficient table 114. Instead, the mantissa is loaded into the barrel shifter 110, and the shift value table 108 uses the input F value identifying the function (e.g., tanh(x)) and the corresponding input exponent to determine a number of right-shifts applied to barrel shifter 110 to align the table index. A pad bit of "0" is shifted into the MSB of the barrel shifter 110 for each right-shift. In one embodiment, the polynomial coefficient table 114 uses a 7-bit table index. Thus, for EXP = 0 with 5 MSB's used as a table index, the shift value table 108 right-shifts the barrel shifter 110 by 2 bits. Similarly, the barrel shifter 110 is right-shifted by 3 bits for EXP = -1 with 4 table index bits, the barrel shifter 110 is right-shifted by 4 bits for EXP = -2 with 3 table index bits, and the barrel shifter 110 is right-shifted by 2 bits for EXP = -3 with 2 table index bits.

A second table 304 lists the shifted mantissa values for the tanh(x) function, the corresponding unbiased exponent value EXP, and the corresponding number of entries (# entries) similar to the table 302. In each case, the mantissa has been right-shifted by the barrel shifter 110 based on the input exponent for table index alignment. Based on a 7-bit table index, a separation point 306 is shown for the table 304 separating the mantissa into 7 table index MSBs to the left and the remaining 16 least-significant bit (LSB) interpolator index bits to the right. Each right shift causes the LSB bit of the mantissa to be shifted out of the right side of the barrel shifter 110 so that these bits are discarded bits 308. Although discarding bits somewhat reduces accuracy, the overall number of bits of the floating-point numbers is selected to achieve sufficient accuracy even after discarding the least significant bits.

The F value is used by the polynomial coefficient table 114 as a base address to locate the polynomial coefficient sets for the corresponding function, such as, for example, the tanh(x) function. For simplicity and ease of understanding, the unbiased exponent EXP from the table 304 is shown provided to the polynomial coefficient table 114 as a first table offset to locate a sub-table within the overall tanh(x) function table that corresponds with the input exponent. It is appreciated that the biased exponent value may be the actual value received and used as the first offset. Also, the 7 MSB's of the shifted mantissa form a 7-bit table index that is used as a second table offset within the sub-table indexed by the corresponding exponent. The polynomial coefficient table 114 then provides the corresponding polynomial coefficient set to a first input of the polynomial interpolator 116, which receives at a second input the 16 LSB's of the shifted mantissa from table 304 as the interpolator index. The polynomial interpolator 116 then calculates and provides a preliminary output mantissa value to an input of the OUDAN shifter 122 as previously described. The OUDAN shifter 122 may shift the preliminary output mantissa right or left to achieve the output mantissa value loaded into the output register 106 as previously described.

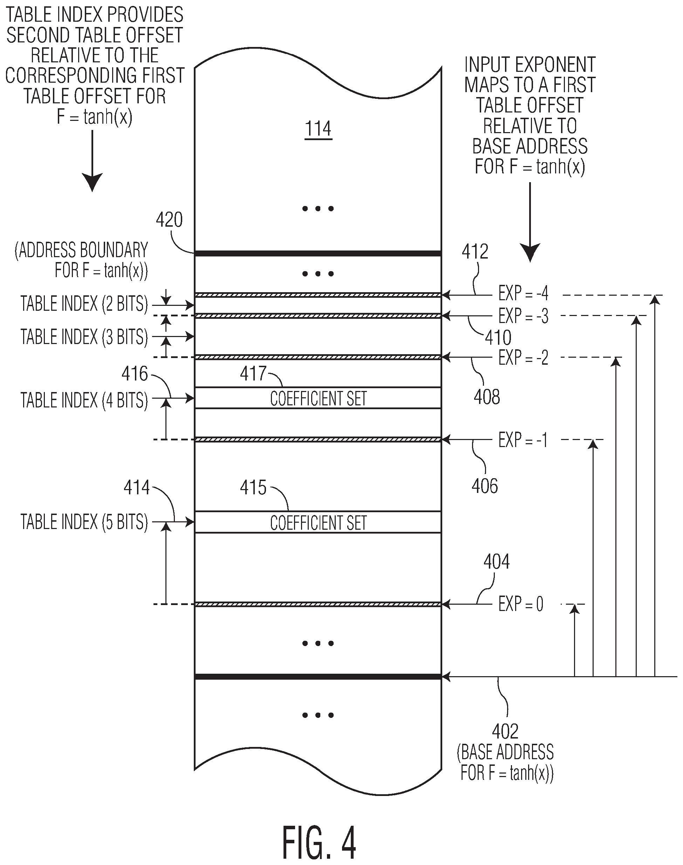

FIG. 4 is a figurative diagram illustrating a portion of the polynomial coefficient table 114 associated with the tanh(x) function. The polynomial coefficients are organized as coefficient sets for use by the polynomial interpolator 116. In one embodiment, for example, the polynomial interpolator 116 is configured to use a set of three coefficients c0, c1, and c2 for solving a second-order polynomial equation y = c₀ + c₁*x + c₂ * x² to calculate the preliminary output mantissa y. The coefficient sets for the tanh(x) function are located between a base address 402 and an address boundary 420. In one embodiment, the unbiased exponent value EXP is shown as mapping to a corresponding first table offset relative to the base address 402 for indexing corresponding coefficients associated with that exponent. The table index from the MSB portion of the shifted mantissa provides a corresponding second table offset relative to the First table offset to access a specific coefficient set. Although the table index is 7 bits in each case, the significant number of bits are listed for each table index.

As shown, for example, EXP = 0 maps to an offset to a beginning address 404 for accessing 32 polynomial coefficient set entries associated with an exponent of 0, EXP = -1 maps to an offset to a beginning address 406 for accessing 16 polynomial coefficient set entries associated with an exponent of -1, EXP = -2 maps to an offset to a beginning address 408 for accessing 8 polynomial coefficient set entries associated with an exponent of -2, EXP = -3 maps to an offset to a beginning address 410 for accessing 8 polynomial coefficient set entries associated with an exponent of -3, EXP = -4 maps to an offset to a beginning address 412 for accessing 4 polynomial coefficient set entries associated with an exponent of -4, and so on. For EXP = 0, the table index includes 5 significant bits (LSB's) to access 32 different coefficient sets. As shown, for example, the table index is a second offset added to the address 404 to generate an address 414 to index a coefficient set 415. Similarly, for EXP = -1, the table index is a 4-bit second offset added to the address 406 to generate an address 416 to index a coefficient set 417, and so on.

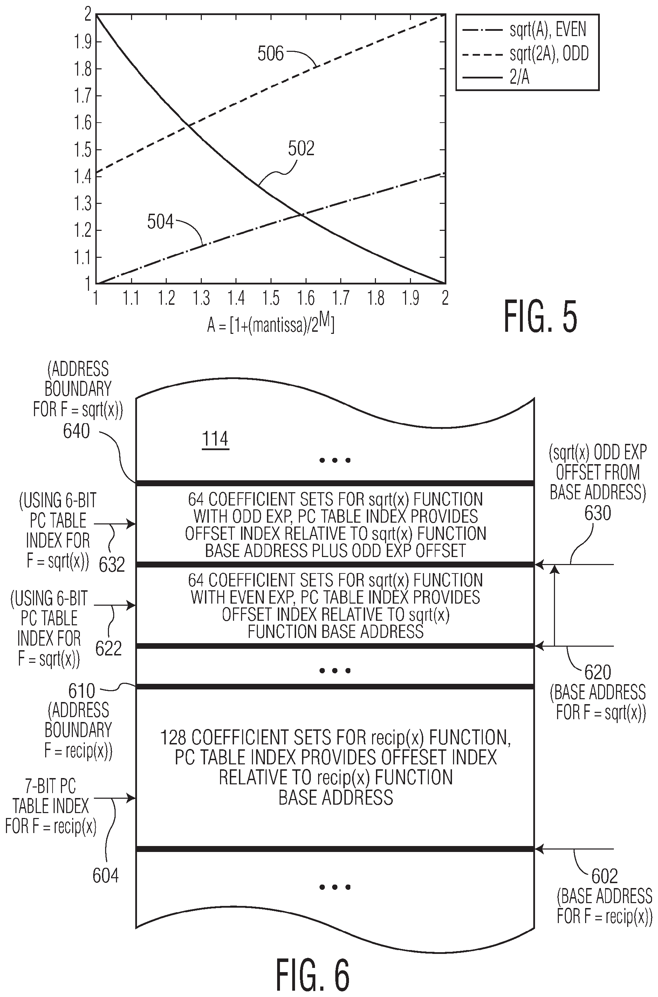

FIG. 5 is a graphic diagram plotting curves associated with a pair of basic functions including the reciprocal function y = 1/x = recip(x) and the square-root function $y = \sqrt{x} = sqrt \left(x\right)$. The value A = [1 + (mantissa)/2^{M}] within the square brackets of equation (1) is provided along the horizontal axis ranging from 1 to 1.9 according to the normal format. A curve 502 plots the reciprocal value 2/A which also ranges from 1 to 1.9 and which is used to determine the mantissa of the reciprocal of the input number as further described herein. In one embodiment, the curve 502 is divided into 128 points and a polynomial coefficient set is determined for each point and stored within the polynomial coefficient table 114. As described further herein, the most significant bits of the input mantissa from the interpolation register 104 are applied to the polynomial coefficient table 114 to retrieve a set of coefficients for a corresponding point of the subdivided curve 502 stored therein, and the retrieved coefficient set along with the remaining bits from the interpolation register 104 forming the interpolation index are used by the polynomial interpolator 116 to determine the preliminary output mantissa.

Another curve 504 plots the square-root of A, shown as sqrt(A), which is used to determine the mantissa of the square-root of the input number when the exponent is even, and another curve 506 plots the square-root of 2A, shown as sqrt(2A), which is used to determine the mantissa of the square-root of the input number when the exponent is odd. In one embodiment, each of the curves 504 and 506 are subdivided into 64 points and a polynomial coefficient set is determined for each point for each curve and stored within the polynomial coefficient table 114. As described further herein, after shifting by the barrel shifter 110, the most significant bits of the input mantissa from the interpolation register 104 are applied to the polynomial coefficient table 114 to retrieve a set of coefficients for a corresponding point of a selected one of the subdivided curves 50 4 and 506 stored therein, and the retrieved coefficient set along with the remaining bits from the interpolation register 104 forming the interpolation index are used by the polynomial interpolator 116 to determine the preliminary output mantissa. The coefficient set is selected from a first table corresponding to the curve 504 when the exponent is even, or is selected from a second table corresponding to the curve 506 when the exponent is odd.

The sign of the reciprocal function recip(x) remains the same from input to the output so that the exponent and sign logic block 124 simply copies the sign bit from the input register to the output register 106. The absolute value of the input number may be expressed as |value| = A*2^{N} in which an asterisk "*" denotes multiplication and "N" is the input exponent. Thus, the reciprocal of the absolute value may be expressed by the following equation (2): $\frac{1}{\left|value\right|} = \frac{1}{A} {2}^{- N} = \frac{2}{A} {2}^{- N - 1} .$ (2) Although the exponent of the intermediate value may simply be the negated value of N, the mantissa 1/A is out of range for the normal format since it varies from ^{~}0.5 to ^{~}1 rather than from 1 to 1.9. Thus, the mantissa is multiplied by 2, or 2/A, to place it within the normal range of 1 to 1.9, while the exponent is adjusted by subtracting 1. In this manner, the output exponent is determined by the exponent and sign logic block 124 in a relatively simple manner by subtracting 1 from the negated N value according to equation (2).

In one embodiment, the output mantissa for the recip(x) function is determined using the most significant 7 bits of the input mantissa as the polynomial coefficient table index and using the remaining lesser significant bits as the interpolation index. This is because 7 bits are needed to identify the 128 points of the subdivided curve 502 stored in the polynomial coefficient table 114. It is understood that a different number of points and corresponding bits may be used in alternative embodiments for different configurations. It is noted that the input mantissa is not shifted by the barrel shifter 110 (or at least the shift value is 0) for the reciprocal function recip(x). The polynomial coefficient table 114 provides the corresponding polynomial coefficients that are used by the polynomial interpolator 116 along with the interpolation index to determine the preliminary output mantissa. Since the preliminary output mantissa is within the normal range, it is also used as the output mantissa without further shifting by the OUDAN shifter 122. Also, the input exponent value is not used by the polynomial coefficient table 114 and the result exponent table 120 is also not used for determining the output exponent.

The sign of the input value x for the square-root function sqrt(x) should be positive and if so, the exponent and sign logic block 124 simply copies the sign bit from the input register to the output register 106. If the sign is negative (e.g., x < 0), however, then the output is assigned as NAN (not a number), which is handled accordingly or otherwise triggers an error. The same is true for the reciprocal square-root function rsqrt(x). The square-root of |value| may be expressed according to the following equation (3): $\sqrt{\left|value\right|} = \sqrt{A} \sqrt{{2}^{N}} = \sqrt{A} {2}^{N / 2} \left(for even N\right) , or \sqrt{A} \sqrt{{2}^{N}} = \sqrt{2 A} {2}^{\left(N-1\right) / 2} \left(for odd N\right) .$ (3) The exponent and sign logic block 124 determines the output exponent by dividing the input exponent by 2 when N is even, or by first subtracting 1 from the input exponent and then dividing by 2 when N is odd. The result exponent table 120 is not used for the sqrt(x) function. The mantissa for the sqrt(x) function is determined using the operative table within the polynomial coefficient table 114 based on whether exponent is even or odd.

In one embodiment, since each table holds 64 values addressable using 6 bits, the shift value table 108 first controls the barrel shifter 110 to right-shift the input mantissa by 1 bit to provide a 6-bit polynomial coefficient table index in the interpolator register 104. This is because only 6 bits are needed to identify the 64 points of either subdivided curve 504 or 506 stored in the polynomial coefficient table 114. It is understood that a different number of points and corresponding bits may be used in alternative embodiments for different configurations. It is noted that the shift value table 108 does not use the input exponent value but simply shifts based on the F value corresponding to the sqrt(x) function. The input exponent is, however, used by the polynomial coefficient table 114 for determining whether to use the even table (when the exponent is even) or the odd table (when the exponent is odd). It is noted that the odd/even determination of the exponent is based on the unbiased exponent as represented as EXP rather than by the unsigned biased value (in which the odd/even determination between the biased exponent and EXP is reversed since the bias value of +127 is an odd value).

The polynomial coefficient table 114 uses the 6-bit polynomial coefficient table index to access the corresponding polynomial coefficient set provided to the polynomial interpolator 116, which uses the remaining bits in the interpolator register 104 as the interpolation index for determining the preliminary output mantissa. Since the preliminary output mantissa is within the normal range for the sqrt(x) function, it is also used as the output mantissa without further shifting.

FIG. 6 is a figurative diagram illustrating a portion of the polynomial coefficient table 114 storing coefficient sets for both the reciprocal function recip(x) and the square-root function sqrt(x) according to one embodiment. Again, the polynomial coefficients are organized as coefficient sets for use by the polynomial interpolator 116, such as 3 coefficients each for use in solving a second-order polynomial equation or the like.

In the illustrated embodiment, the 128 coefficient sets for the recip(x) function as determined by the F value are located between a base address 602 and an address boundary 610. In the illustrated embodiment and as previously described in FIG. 5, the curve 502 is divided into 128 points and a polynomial coefficient set is determined for each point and stored within the polynomial coefficient table 114, shown between the base address 602 and the address boundary 610. The 7-bit polynomial coefficient (PC) table index from the interpolation register 104 (e.g., 7 MSB's of the input mantissa) is used as an offset index relative to the base address 602 (e.g., table index added to base address) to determine an address 604 of a corresponding coefficient set provided to the polynomial interpolator 116. The remaining 16 bits of the input mantissa form the interpolation index used by the polynomial interpolator 116 for determining the output mantissa as previously described.

The 128 coefficient sets for the sqrt(x) function (separated into two separate tables including 64 coefficient sets each) are located between a base address 620 determined by the F value and an address boundary 640. In the illustrated embodiment and as previously described in FIG. 5, the polynomial coefficient sets for the sqrt(x) function are divided into two tables including a first (even) table used when EXP is even and a second (odd) table when EXP is odd. The input exponent is provided to the polynomial coefficient table 114 for determining a first offset for accessing the correct table. When EXP is even, the offset is zero (e.g., no offset) for accessing the first table storing the 64 coefficient sets with even EXP, and when EXP is odd, the offset is added to the base address 620 to provide a base address 630 for accessing the second table storing the 64 coefficient sets with odd EXP.

The 7-bit PC table index from the interpolation register 104 (which is actually a 6-bit index including the 6 MSB's of the input mantissa after 1 bit right shift by the barrel shifter 110) is used as an offset index relative to the base address 620 (e.g., table index added to base address) to determine an address 622 of a corresponding coefficient set provided to the polynomial interpolator 116 when EXP is even. The 6-bit PC table index from the interpolation register 104 after right-shift is used as an offset index relative to the base address 630 to determine an address 632 of a corresponding coefficient set provided to the polynomial interpolator 116 when EXP is odd. In either case, the remaining 16 bits in the interpolation register 104 form the interpolation index used by the polynomial interpolator 116 for determining the output mantissa as previously described.

Although not explicitly shown, operation is similar for the reciprocal square-root function rsqrt(x) along with any other supported basic functions. One or more curves are determined according to the normal format and subdivided into a corresponding number of points, and a coefficient set is determined for each point and stored in the polynomial coefficient table 114. The barrel shifter 110 may be used to shift the input mantissa based on the function value for determining the polynomial coefficient table index. The function value is used to identify a base address and the exponent value may be used, if needed, to identify an appropriate one of multiple sub-tables of coefficient sets within the overall function table. The corresponding coefficient set retrieved from the polynomial coefficient table 114 along with the remaining lesser significant bits used as the interpolation index are used by the polynomial interpolator to determine the preliminary output mantissa. The preliminary output mantissa may be used as the output mantissa when in the normal format range.

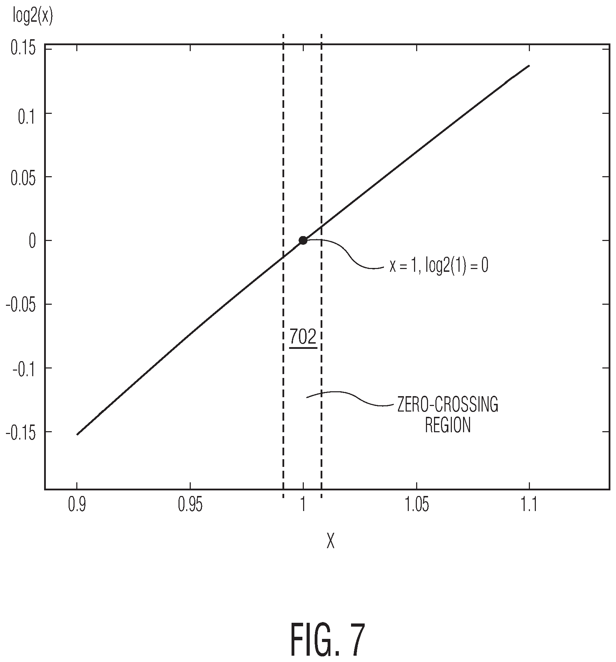

FIG. 7 is a graphic diagram plotting a portion of the log2(x) function versus input value x centered at an input value of x = 1. Some functions, including the log2(x) function, have a zero-crossing region in which the result is close to 0 such that the resulting exponent changes rapidly while the input changes slightly. These functions include, for example, sinpi(n + 0.0 +/- Δ), cospi (n + 0.5 +/- Δ) in which "n" is any signed integer, and log2(1.0 +/- Δ), in which "Δ" is a very small positive number. As shown, a pair of dashed lines on either side of input x = 1 represents the zero-crossing region 702 for the log2(x) function. Within this zero-crossing region 702, the exponent estimate dominates over the mantissa estimate in terms of accuracy. The leading zero/one count processor 118 is used to count the number of leading zero or one bits of the interpolation index field as an indication of magnitude of the input to scale the resulting output exponent. When the exponent is scaled, the mantissa is also scaled accordingly by the OUDAN shifter 122.

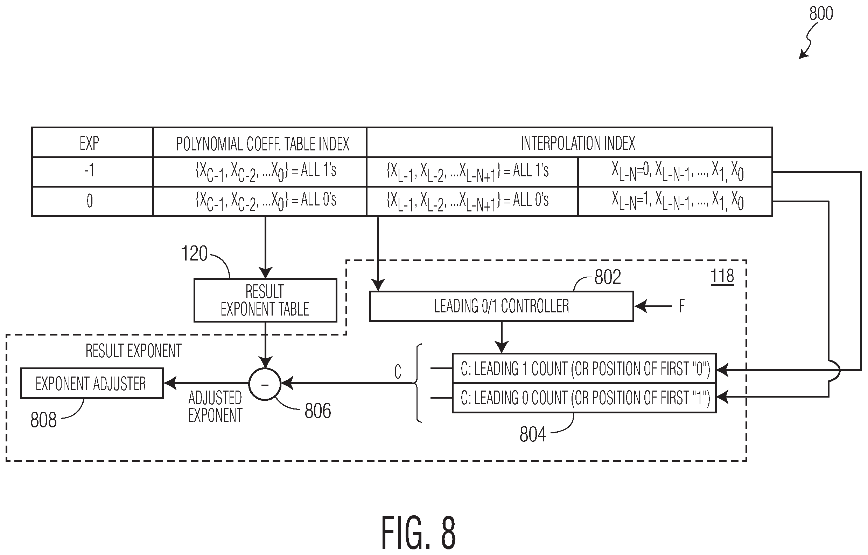

FIG. 8 is a figurative block diagram illustrating operation of the leading zero/one count processor 118 when implemented according to one embodiment for the log2(x) function. A table 800 lists the unbiased exponent EXP and the corresponding input mantissa for the log2(x) function and an input value that is within the delta region, in which the mantissa is separated into the polynomial coefficient table index and the interpolation index. When x = "1.0 - Δ" and EXP = -1 as shown in the first row of table 800, then the mantissa includes a polynomial coefficient table index having all 1's and an interpolation index having zero or more leading 1's followed by a 0. When x = "1.0 + Δ" and EXP = 0 as shown in the second row of table 800, then the mantissa includes a polynomial coefficient table index having all 0's and an interpolation index having zero or more leading 0's followed by a 1. It is noted that the actual input exponent value may be the unsigned biased value, in which EXP is shown for better understanding.

The leading zero/one count processor 118 may include a leading 0/1 controller 802, a counter 804, an adder 806, and an exponent adjuster 808. The leading 0/1 controller 802 uses the F value to detect those functions having a zero-crossing region, such as, for example, the log2(x) function. If so, the leading 0/1 controller 802 monitors the input exponent and the interpolation register 104 to detect when the input is within the critical range such that the output is within the zero-crossing region for that function. When within the critical range of an applicable function, the leading 0/1 controller 802 activates the counter 804, which counts the leading 1 count of the interpolation index for the first case or the leading 0 count of the interpolation index for the second case and outputs a count value C. It is noted that the counter 804 counts 0's or 1's using the interpolation index portion of the mantissa and ignores the polynomial coefficient table index portion. C is provided to an input of the adder, which receives the result exponent at the output of the result exponent table 120 at another input, which subtracts C from the result exponent and which outputs an adjusted exponent provided to the exponent adjuster 808. The exponent adjuster 808 cooperates with the exponent and sign logic block 124 to replace the result exponent with the adjusted exponent when there is an adjustment. In addition, if an adjustment is made, the exponent adjuster 808 cooperates with the OUDAN shifter 122 to adjust the mantissa provided by the polynomial interpolator 116 accordingly.

As an example, for the log2(x) function when the input exponent is 0, the 6 MSBs of the mantissa are used as the polynomial coefficient table index and the remaining bits are used as the interpolation index. When all 6 MSBs are zero, the input is very close to +1.0 as detected by the leading 0/1 controller 802. These 6 bits of the polynomial coefficient table index are applied to the polynomial coefficient table 114 to retrieve a corresponding coefficient set, and also to the result exponent table 120 to retrieve a corresponding result exponent. The counter 804 is activated to count the leading one or zeros of the interpolation index to determine a count value C. C is subtracted from the result exponent by the adder 806 to determine the adjusted component. For an input x = 1.008, the input exponent is zero and the mantissa = 000000_1000... in which "_" demarcates the polynomial coefficient table index from the interpolation index. The coefficient table outputs a small nonzero mantissa value, the result exponent output from the result exponent table is -7, and the leading bit of the interpolation index is 1 so that C = 0. In this case, the exponent and the mantissa are not adjusted. For an input x = 1.002, the input exponent is zero and the mantissa = 000000_0010.... The coefficient table outputs a small nonzero mantissa value, the result exponent output from the result exponent table is -7, the counter 804 counts two leading 0's so that C = 2. In this case, the exponent is adjusted from -7 to -9 and the mantissa is shifted left by 2 places to multiply the mantissa by 4.

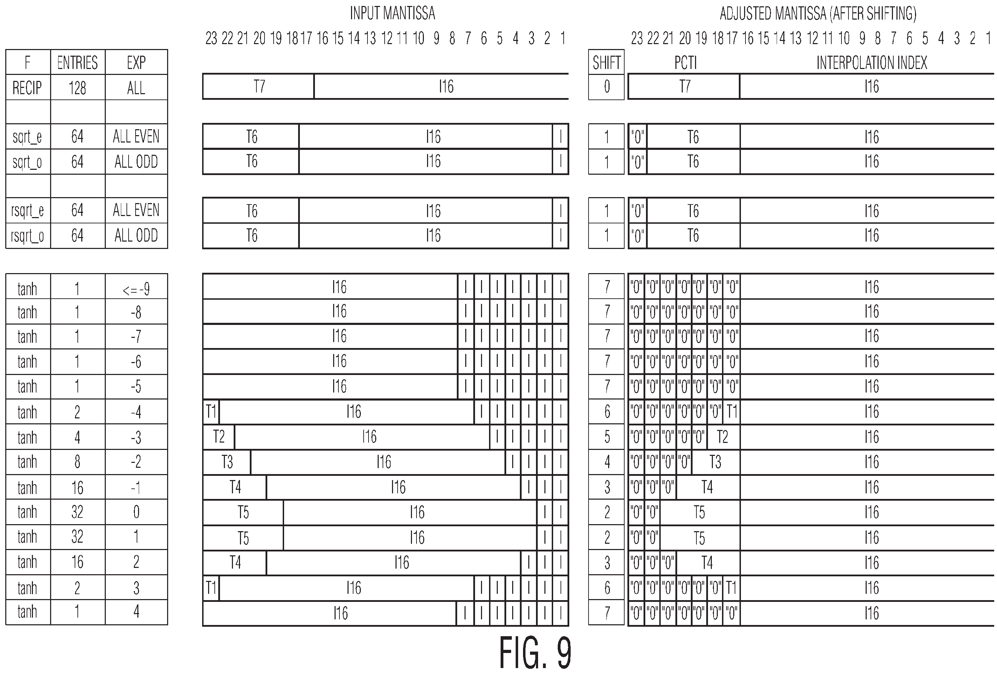

FIG. 9 is a chart in tabular format that lists the F value, a number of entries (# entries) identifying the number of coefficient sets stored in the polynomial coefficient table 114, the unbiased exponent value EXP, the input mantissa, a shift value, and the adjusted mantissa after any shifting by the barrel shifter 110 for the reciprocal, square-root, reciprocal square-root, and hyperbolic tangent functions using the 32-bit single-precision floating-point format. The input mantissa is subdivided into "T" bits used for the polynomial coefficient table index (PCTI), "I" bits used for the interpolation index, or "don't care" bits identified by a symbol " | ". It is noted that the "don't care" bits are generally discarded after shifting. Since the PCTI of the adjusted mantissa is 7 bits in each case, the resulting interpolation index is 16 bits in each case. When shifting is applicable, a "0" bit is shifted in at the left. The F value for the recip(x) function is simply listed as "recip." The F value for the sqrt(x) function is either "sqrt_e" when the unbiased exponent is even or "sqrt_ o" when the unbiased exponent is odd. In a similar manner, the F value for the rsqrt(x) function is either "rsqrt_e" when the unbiased exponent is even or "rsqrt_o" when the unbiased exponent is odd. The F value for the tanh(x) function is simply listed as "tanh."

For the recip(x) function as previously described, a single table with 128 coefficient set entries are stored in the polynomial coefficient table 114 which applies to "All" of the unbiased exponents. The input mantissa includes 7 MSB's that are used as T bits in which the remaining 16 LSB's are I bits used as the interpolation index. The shift value is 0 indicating no shift so that the adjusted mantissa includes the 7 MSB's as the PCTI and the remaining 16 LSB's as the interpolation index.

For the sqrt(x) function as previously described, a first table with 64 coefficient set entries are stored in the polynomial coefficient table 114 which applies to all even ones of the unbiased exponents (for sqrt_e), and a second table with 64 coefficient set entries are stored in the polynomial coefficient table 114 which applies to all odd ones of the unbiased exponents (for sqrt_o). The input mantissa includes 6 MSB's that are used as T bits, the following 16 bits are listed as I bits, and an LSB don't care bit. The shift value is 1 indicating that a single 0 is shifted in from the left in which the original LSB of the input mantissa is discarded. In this case, the adjusted mantissa includes a leading 0 and the 6 of the original MSB's as the PCTI and the remaining 16 LSB's as the interpolation index.

The rsqrt(x) function is treated in substantially the same manner as the sqrt(x) function. Thus, a first table with 64 coefficient set entries are stored in the polynomial coefficient table 114 which applies to all even ones of the unbiased exponents (for rsqrt_e), and a second table with 64 coefficient set entries are stored in the polynomial coefficient table 114 which applies to all odd ones of the unbiased exponents (for rsqrt_o). The input mantissa includes 6 MSB's that are used as T bits in which the following 16 LSB's are listed as I bits with a final don't care bit. The shift value is 1 indicating that a single 0 is shifted in from the left in which the original LSB of the input mantissa is discarded. In this case, the adjusted mantissa includes a leading 0 and the 6 of the original MSB's as the PCTI and the remaining 16 LSB's as the interpolation index.

For the tanh(x) function, a single coefficient set is stored in the polynomial coefficient table 114 when the unbiased exponent EXP is -5 or less. In each of these cases, the 16 MSB's are used for the interpolation index and the remaining 7 LSB's are "don't cares." Also, the shift value is 7 so that 7 0's are shifted in from the left forming a PCTI of all 0's. The original 16 MSB's are used as the interpolation index and the remaining 7 LSB's are discarded.

When the unbiased exponent is EXP = -4 for the tanh(x) function, 2 coefficient sets are stored in the polynomial coefficient table 114 in which the MSB of the input mantissa is "T" bit used as in index to address the 2 coefficient set entries (such as shown in FIG. 4). The following 16 bits are used for the interpolation index and the remaining 6 LSB's are "don't cares" to be discarded. In this case, the shift value is 6 so that 6 0's are shifted in from the left forming a PCTI with 6 leading 0's and the original MSB as the LSB (for indexing the 2 coefficient set entries), with the following 16 bits used as the interpolation index while the remaining 6 LSB's are discarded.

For the next 4 unbiased exponent values EXP = -3 to 0 for the tanh(x) function as shown in FIGs 3 and 4, with each increment of EXP, the number of T bits is incremented by 1 while the number of coefficient sets is increased by a power of two. Also, the following 16 bits are used as the interpolation index in each case in which the remaining bits are discarded. The shift value is decremented from 5 to 2 to form the 7-bit PCTI with a corresponding number of leading 0's and a corresponding 16-bit interpolation index.

When the unbiased exponent EXP = 1, it is treated in the same manner as EXP = 0 resulting in a table with 32 coefficient sets indexed by 5 of the 7 bits of the PCTI and a 16-bit interpolation index. When the unbiased exponent EXP = 2, it is treated in the same manner as EXP = -1 resulting in a table with 16 coefficient sets indexed by 4 of the 7 bits of the PCTI and a 16-bit interpolation index. When the unbiased exponent EXP = 3, it is treated in the same manner as EXP = -4 resulting in a table with 2 coefficient sets indexed by 1 of the 7 bits of the PCTI and a 16-bit interpolation index. When the unbiased exponent EXP = 4, it is treated in the same manner as when the unbiased exponent EXP is -5 or less with a PCTI of all 0's and a 16-bit interpolation index.

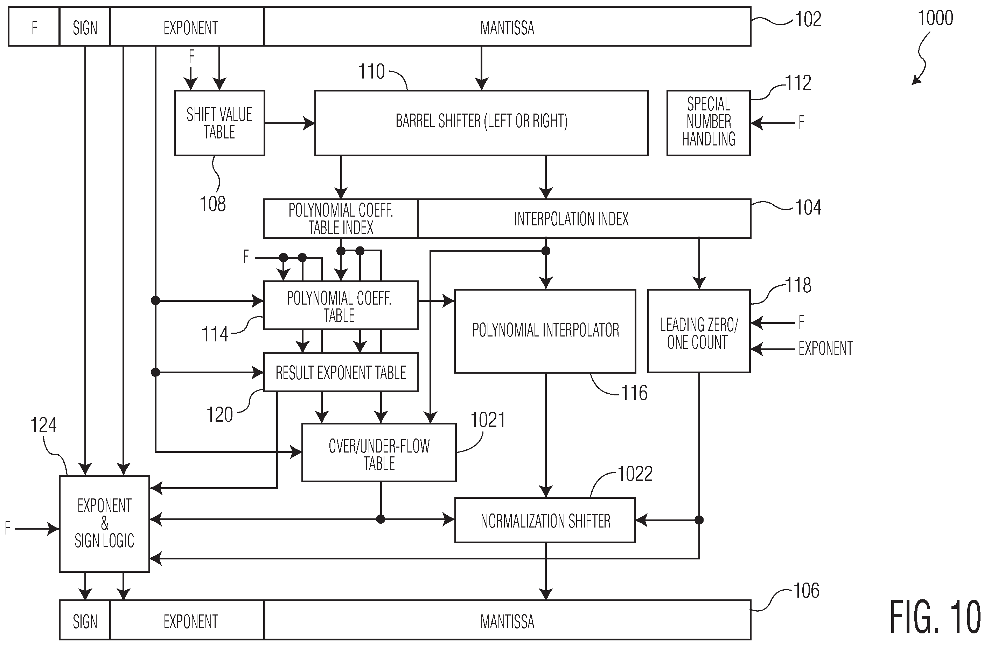

FIG. 10 is a simplified block diagram of a transcendental math hardware accelerator 1000 implemented according to an alternative embodiment. The transcendental math hardware accelerator 1000 is substantially similar to the transcendental math hardware accelerator 100 and includes the input register 102, the interpolation register 104, the output register 106, the shift value table 108, the barrel shifter 110, the special number handling processor 112, the polynomial coefficient table 114, the polynomial interpolator 116, the leading zero/one count processor 118, the result exponent table 120, and the exponent and sign logic block 124 coupled to operate in substantially the same manner as previously described. Pipeline stages and registers may be included in a similar manner, but are not shown. The transcendental math hardware accelerator 1000 further includes an overflow/underflow table 1021 and replaces the OUDAN shifter 122 with a normalization shifter 1022. The overflow/underflow table 1021 has inputs for receiving the biased exponent, the F value, the polynomial coefficient table index, and the interpolation index, and has an output coupled to the normalization shifter 1022 and the exponent and sign logic block 124. The normalization shifter 1022 performs the normalization function but does not detect mantissa overflow or underflow, in which overflow/underflow is instead performed by the overflow/underflow table 1021.

The OUDAN shifter 122 of the transcendental math hardware accelerator 100 performs the mantissa overflow/underflow function only after receiving a preliminary mantissa from the polynomial interpolator 116 before detecting overflow/underflow and performing correction. In some cases, this requires additional logic latency and may require an additional pipeline stage for completion. The overflow/underflow table 1021 includes prestored shift values, in which it detects the conditions that triggers overflow or underflow from the input exponent, F, polynomial coefficient table index, and interpolation index values and accesses a corresponding prestored shift value to control the normalization shifter 1022 to adjust the mantissa. The overflow/underflow table 1021 provides a significant speed enhancement since it does not need to wait for a preliminary mantissa from the polynomial interpolator 116 for determining and making an overflow/underflow adjustment. In addition, such mantissa out-of-range events are relatively rare so that the overflow/underflow table 1021 has a relatively small number of entries and thus is not very large.

A transcendental math accelerator including a barrel shifter, a polynomial coefficient table (PCT), a polynomial interpolator, a normalization shifter, a result exponent table (RET), and exponent and sign logic (ESL). The barrel shifter shifts the input mantissa based on a specified function and the input exponent into a polynomial coefficient table index (PCTI) and an interpolation index. The PCT selects a coefficient set using the specified function and the PCTI. The polynomial interpolator calculates a preliminary output mantissa according to a polynomial equation using the coefficient set and the interpolator index. The normalization shifter shifts the output mantissa for a normalized floating-point format. The RET selects an exponent based on the function, the input exponent, and the PCTI. The ESL determines the output sign using the input sign and the function, and determines the output exponent based on the input exponent, the result exponent, and any shifts by the normalization shifter.

Aspects of the disclosure are defined in the accompanying claims. In a first aspect, there is provided a transcendental math hardware accelerator configured to perform a selected one of a plurality of math functions on an input floating-point number comprising an input sign, an input exponent, and an input mantissa for determining an output floating-point number comprising an output sign, an output exponent, and an output mantissa, the transcendental math hardware accelerator comprising: a barrel shifter configured to shift the input mantissa by an amount specified by a shift value table based on a specified function and the input exponent into a polynomial coefficient table index and an interpolation index; a polynomial coefficient table configured to select one of a plurality of coefficient sets using a table index determined using the specified function and the polynomial coefficient table index; a polynomial interpolator configured to calculate a preliminary output mantissa according to a predetermined polynomial equation using the selected coefficient set and the interpolator index; a normalization shifter configured to shift the preliminary output mantissa to provide the output mantissa that fits in a normalized floating-point format; a result exponent table configured to select a result exponent using the selected function, the input exponent, and the polynomial coefficient table index; and exponent and sign logic configured to determine the output sign using the input sign and the specified function and to determine the output exponent based on the input exponent, the result exponent and a number of shifts determined by the normalization shifter.

In some embodiments, the transcendental math hardware accelerator further comprises a special number handling processor configured to detect when the input number has a special number format including +/- zero, +/- infinity, and not a number (NAN), and to either correct the input floating-point number, to directly determine and provide an output floating-point number, or to indicate an error.

In some embodiments, the transcendental math hardware accelerator further comprises a leading zero/one count processor configured to detect when the input floating-point number is within a critical range for the selected function such that the output floating-point number is within a zero-crossing region and to adjust the result exponent based on a leading 0 or a leading 1 count value, wherein the normalization shifter adjusts the preliminary output mantissa accordingly.

In some embodiments, the leading zero/one count processor comprises: a counter configured to count leading 0's or 1's of the interpolation index and to provide the count value; a controller configured to detect that the input floating-point number is within the critical range for the selected function, and when detected, to activate the counter to provide the count value; an adder configured to subtract the count value from the result exponent to provide an adjusted exponent; and an exponent adjuster configured to adjust the output exponent provided by the exponent and sign logic based on the adjusted exponent.

In some embodiments, the predetermined polynomial equation is a second-order polynomial equation in which each coefficient set includes up to three coefficients.

In some embodiments, for at least one of the plurality of math functions, the specified function maps to a base address and the polynomial coefficient table index operates as an offset relative to the base address to generate the table index used to select one of a plurality of coefficient sets of the polynomial coefficient table.

In some embodiments, for at least one of the plurality of math functions, the specified function maps to a first base address when the input exponent is odd and to a second base offset when the input exponent is even, and wherein the polynomial coefficient table index operates as an offset relative to either the first base address or the second base address to generate the table index used to select one of a plurality of coefficient sets of the polynomial coefficient table.

In some embodiments, for at least one of the plurality of math functions in which the number of coefficient sets varies with the input exponent, the specified function maps to a base address, the input exponent operates as a first offset relative to the base address and the polynomial coefficient table index operates as a second offset relative to the first offset to generate the table index used to select one of a plurality of coefficient sets of the polynomial coefficient table.

In some embodiments, the normalization shifter is further configured to detect an overflow or underflow of the preliminary output mantissa and to shift the preliminary output mantissa and to adjust the output exponent accordingly.

In some embodiments, the transcendental math hardware accelerator further comprises an overflow/underflow table that uses the input exponent, the function value, the polynomial coefficient table index, and the interpolation index to determine an index used to select a shift value provided to the normalization shifter for shifting the mantissa and to the exponent and sign logic for shifting the output exponent by a corresponding amount.

In a second aspect, there is provided a method of performing a selected one of a plurality of math functions on an input floating-point number comprising an input sign, an input exponent, and an input mantissa for determining an output floating-point number comprising an output sign, an output exponent, and an output mantissa, the method comprising: shifting the input mantissa by an amount specified by a shift value table based on a specified function and the input exponent into a polynomial coefficient table index and an interpolation index; selecting one of a plurality of coefficient sets stored in a polynomial coefficient table using a table index determined using the specified function and the polynomial coefficient table index; calculating a preliminary output mantissa according to a predetermined polynomial equation using the selected coefficient set and the interpolator index; shifting the preliminary output mantissa to provide the output mantissa with a normalized floating-point format; selecting a result exponent using the selected function, the input exponent, and the polynomial coefficient table index; determining the output sign using the input sign and the specified function; and determining the output exponent based on the input exponent, the result exponent and a number of shifts based on a shift amount of the preliminary output mantissa.

In some embodiments, the method further comprises: detecting when the input number has a special number format including +/- zero, +/- infinity, and not a number (NAN); and performing at least one of the following based on the detected special number: correcting the input floating-point number; directly determining and providing an output floating-point number; and indicating an error.

In some embodiments, the method further comprises: detecting that the input floating-point number is within a critical range for the selected function such that the output floating-point number is within a zero-crossing region; adjusting the result exponent based on a leading 0 or a leading 1 count; and adjusting the preliminary output mantissa based on adjustment to the result exponent.

In some embodiments, the method further comprises: activating a counter to count either the leading 0's or the leading 1's of the interpolation index to provide a count value upon detecting that the input floating-point number is within a critical range for the selected function such that the output floating-point number is within a zero-crossing region; subtracting the count value from the result exponent to provide an adjusted exponent; and adjusting the output exponent provided by the exponent and sign logic based on the adjusted exponent.

In some embodiments, the calculating a preliminary output mantissa according to a predetermined polynomial equation comprises calculating a preliminary output mantissa using a second-order polynomial equation and a coefficient set that includes up to three coefficients.

In some embodiments, for at least one of the plurality of math functions, the method further comprising: mapping the specified function to a base address; using the polynomial coefficient table index as an offset relative to the base address for generating the table index; and using the table index to select one of a plurality of coefficient sets stored in the polynomial coefficient table.

In some embodiments, for at least one of the plurality of math functions, the method further comprising: mapping the specified function to a first base address when the input exponent is odd and mapping the specified function to a second base offset when the input exponent is even; using the polynomial coefficient table index as an offset relative to either the first base address or the second base address to generate the table index; and using the table index to select one of a plurality of coefficient sets of the polynomial coefficient table.

In some embodiments, for at least one of the plurality of math functions in which the number of coefficient sets varies with the input exponent, the method further comprising: mapping the specified function to a base address; using the input exponent as a first offset relative to the base address; and using the polynomial coefficient table index as a second offset relative to the first offset to generate the table index; and using the table index to select one of a plurality of coefficient sets of the polynomial coefficient table.

In some embodiments, the method further comprises detecting an overflow or underflow of the preliminary output mantissa; and shifting the preliminary output mantissa and the output exponent based on the amount of overflow or underflow.

In some embodiments, the method further comprises using the input exponent, the function value, the polynomial coefficient table index, and the interpolation index to determine an index used to select a shift value; and shifting the mantissa and the output exponent based on the shift value.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims. For example, variations of positive circuitry or negative circuitry may be used in various embodiments in which the present invention is not limited to specific circuitry polarities, device types or voltage or error levels or the like. For example, circuitry states, such as circuitry low and circuitry high may be reversed depending upon whether the pin or signal is implemented in positive or negative circuitry or the like. In some cases, the circuitry state may be programmable in which the circuitry state may be reversed for a given circuitry function.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. A transcendental math hardware accelerator configured to perform a selected one of a plurality of math functions on an input floating-point number comprising an input sign, an input exponent, and an input mantissa for determining an output floating-point number comprising an output sign, an output exponent, and an output mantissa, the transcendental math hardware accelerator comprising:
a barrel shifter configured to shift the input mantissa by an amount specified by a shift value table based on a specified function and the input exponent into a polynomial coefficient table index and an interpolation index;
a polynomial coefficient table configured to select one of a plurality of coefficient sets using a table index determined using the specified function and the polynomial coefficient table index;
a polynomial interpolator configured to calculate a preliminary output mantissa according to a predetermined polynomial equation using the selected coefficient set and the interpolator index;
a normalization shifter configured to shift the preliminary output mantissa to provide the output mantissa that fits in a normalized floating-point format;
a result exponent table configured to select a result exponent using the selected function, the input exponent, and the polynomial coefficient table index; and
exponent and sign logic configured to determine the output sign using the input sign and the specified function and to determine the output exponent based on the input exponent, the result exponent and a number of shifts determined by the normalization shifter.

2. The transcendental math hardware accelerator of claim 1, further comprising a special number handling processor configured to detect when the input number has a special number format including +/- zero, +/- infinity, and not a number (NAN), and to either correct the input floating-point number, to directly determine and provide an output floating-point number, or to indicate an error.

3. The transcendental math hardware accelerator of claim 1 or 2, further comprising a leading zero/one count processor configured to detect when the input floating-point number is within a critical range for the selected function such that the output floating-point number is within a zero-crossing region and to adjust the result exponent based on a leading 0 or a leading 1 count value, wherein the normalization shifter adjusts the preliminary output mantissa accordingly.

4. The transcendental math hardware accelerator of claim 3, wherein the leading zero/one count processor comprises:
a counter configured to count leading 0's or 1's of the interpolation index and to provide the count value;
a controller configured to detect that the input floating-point number is within the critical range for the selected function, and when detected, to activate the counter to provide the count value;
an adder configured to subtract the count value from the result exponent to provide an adjusted exponent; and
an exponent adjuster configured to adjust the output exponent provided by the exponent and sign logic based on the adjusted exponent.

5. The transcendental math hardware accelerator of claim 1 or 2, wherein the predetermined polynomial equation is a second-order polynomial equation in which each coefficient set includes up to three coefficients.

6. The transcendental math hardware accelerator of any preceding claim, wherein for at least one of the plurality of math functions, the specified function maps to a base address and the polynomial coefficient table index operates as an offset relative to the base address to generate the table index used to select one of a plurality of coefficient sets of the polynomial coefficient table.

7. The transcendental math hardware accelerator of any preceding claim, wherein for at least one of the plurality of math functions, the specified function maps to a first base address when the input exponent is odd and to a second base offset when the input exponent is even, and wherein the polynomial coefficient table index operates as an offset relative to either the first base address or the second base address to generate the table index used to select one of a plurality of coefficient sets of the polynomial coefficient table.

8. The transcendental math hardware accelerator of any preceding claim, wherein for at least one of the plurality of math functions in which the number of coefficient sets varies with the input exponent, the specified function maps to a base address, the input exponent operates as a first offset relative to the base address and the polynomial coefficient table index operates as a second offset relative to the first offset to generate the table index used to select one of a plurality of coefficient sets of the polynomial coefficient table.

9. The transcendental math hardware accelerator of any preceding claim, wherein the normalization shifter is further configured to detect an overflow or underflow of the preliminary output mantissa and to shift the preliminary output mantissa and to adjust the output exponent accordingly.

10. The transcendental math hardware accelerator of any preceding claim, further comprising an overflow/underflow table that uses the input exponent, the function value, the polynomial coefficient table index, and the interpolation index to determine an index used to select a shift value provided to the normalization shifter for shifting the mantissa and to the exponent and sign logic for shifting the output exponent by a corresponding amount.

11. A method of performing a selected one of a plurality of math functions on an input floating-point number comprising an input sign, an input exponent, and an input mantissa for determining an output floating-point number comprising an output sign, an output exponent, and an output mantissa, the method comprising:
shifting the input mantissa by an amount specified by a shift value table based on a specified function and the input exponent into a polynomial coefficient table index and an interpolation index;
selecting one of a plurality of coefficient sets stored in a polynomial coefficient table using a table index determined using the specified function and the polynomial coefficient table index;
calculating a preliminary output mantissa according to a predetermined polynomial equation using the selected coefficient set and the interpolator index;
shifting the preliminary output mantissa to provide the output mantissa with a normalized floating-point format;
selecting a result exponent using the selected function, the input exponent, and the polynomial coefficient table index;
determining the output sign using the input sign and the specified function; and
determining the output exponent based on the input exponent, the result exponent and a number of shifts based on a shift amount of the preliminary output mantissa.

12. The method of claim 11, further comprising:
detecting when the input number has a special number format including +/- zero, +/- infinity, and not a number (NAN); and
performing at least one of the following based on the detected special number:
correcting the input floating-point number;
directly determining and providing an output floating-point number; and
indicating an error.

13. The method of claim 11 or 12, further comprising:
detecting that the input floating-point number is within a critical range for the selected function such that the output floating-point number is within a zero-crossing region;
adjusting the result exponent based on a leading 0 or a leading 1 count; and
adjusting the preliminary output mantissa based on adjustment to the result exponent.

14. The method of claim 13, further comprising:
activating a counter to count either the leading 0's or the leading 1's of the interpolation index to provide a count value upon detecting that the input floating-point number is within a critical range for the selected function such that the output floating-point number is within a zero-crossing region;
subtracting the count value from the result exponent to provide an adjusted exponent; and
adjusting the output exponent provided by the exponent and sign logic based on the adjusted exponent.

15. The method of any of claims 11 to 14, wherein the calculating a preliminary output mantissa according to a predetermined polynomial equation comprises calculating a preliminary output mantissa using a second-order polynomial equation and a coefficient set that includes up to three coefficients.
